# FASCICULE DE BREVET EUROPEEN

(11) **EP 3 562 742 B1**
(45) Date de publication et mention de la délivrance du brevet: **16.12.2020**
(21) Numéro de dépôt: 17829664.6
(22) Date de dépôt: 27.12.2017
(51) Int. Cl.: B64D 3/02, B64D 1/22, B64D 7/00, F16B 2/08, F16D 49/10, G01B 5/14, F16H 25/20, G01B 7/00, G01B 21/02, G01B 21/16

(54) **DISPOSITIF D'ENTRAINEMENT**
ANTRIEBSVORRICHTUNG
DRIVING DEVICE

(30) Priorité: 27.12.2016 FR 1601869
(43) Date de publication de la demande: 06.11.2019
(73) Titulaire: Thales, 92400 Courbevoie (FR)
(72) Inventeur: CADALEN, François, 06903 Sophia Antipolis Cedex (FR); FRAISSE, Yohann, 06903 Sophia Antipolis Cedex (FR); WARNAN, François, 06903 Sophia Antipolis Cedex (FR)
(74) Mandataire: Marks & Clerk France
(86) Numéro de dépôt international: PCT/EP2017/084615
(87) Numéro de publication internationale: WO 2018/122243

(56) Documents cités:
- EP-A1- 2 210 767
- EP-A2- 3 015 740
- WO-A2-2013/027197
- FR-A- 318 545
- FR-A1- 2 839 352
- JP-A- S53 106 072
- US-A- 3 220 514
- US-A- 4 241 813
- US-A1- 2005 173 994
- US-A1- 2009 199 610

## Description

La présente invention se rapporte aux dispositifs d'entraînement d'un écrou comprenant un système vis-écrou. Dans ce type de dispositifs, la rotation d'une tige filetée provoque la translation d'un écrou, relié à la tige filetée par une liaison hélicoïdale, le long de l'axe longitudinal de la tige Un tel dispositif est connu de US 2005/173994 A1.

Ce type de dispositif est notamment mis en oeuvre dans des dispositifs de détection pour la lutte héliportée contre les menaces sous-marines dans lesquels une antenne pour détecter des menaces sous-marines est suspendue à une plateforme aérienne comme par exemple un aéronef qui permet d'immerger l'antenne. L'antenne comprend les émetteurs et les récepteurs proprement dits et éventuellement des équipements électroniques associés aux émetteurs et récepteurs. Elle peut comprendre également des capteurs d'environnement. De plus, à bord de la plateforme aérienne, le dispositif de détection comprend des équipements nécessaires à la génération des signaux acoustiques et au traitement des données acoustiques reçues.

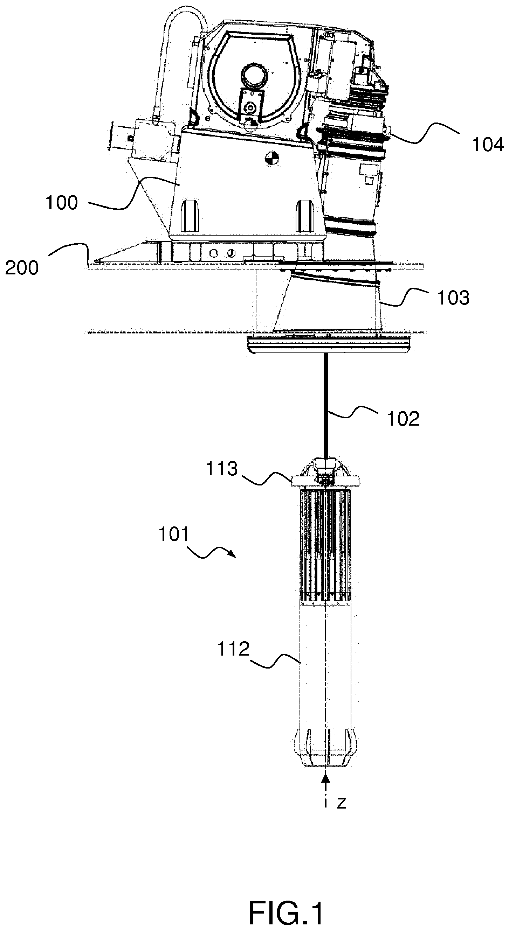

Un exemple de dispositif de détection est représenté sur la figure 1. Il comprend un treuil 100 destiné à être installé dans une plateforme aérienne. Le dispositif de lutte aéroportée comprend une antenne 101 suspendue au bout d'un câble électro-tracteur 102 du treuil 100, éventuellement doté d'un entonnoir 103 (ou « funnel » en terminologie anglo-saxonne) comme c'est le cas sur la figure 1. Le treuil 100 est destiné à effectuer le déploiement et la récupération de l'antenne 101. Sur la figure 1 le treuil 100 est fixé sur un plancher 200 d'une plateforme aérienne. Le câble électro-tracteur 102 permet de véhiculer des signaux ainsi que l'énergie électrique nécessaire à l'émission acoustique et/ou au fonctionnement des récepteurs. En déroulant le câble 102 à l'aide du treuil 100, l'antenne 101 est descendue, au travers de l'éventuel entonnoir 103 dans l'eau. Enrouler le câble 102 permet de remonter l'antenne 101 dans la plateforme aérienne au sein de l'éventuel entonnoir 103 comme représenté sur la figure 1.

L'antenne 101 présente une forme de dôme allongé essentiellement cylindrique. Elle comprend un corps allongé 112 présentant une circonférence extérieure de section sensiblement circulaire dans un plan perpendiculaire à l'axe longitudinal z de l'antenne 101. Le corps allongé 112 est entouré d'une structure de protection 113 (ou « bumper en terminologie anglo-saxonne ») présentant une circonférence extérieure de section sensiblement circulaire dans un plan perpendiculaire à l'axe longitudinal z de l'antenne 101. La circonférence extérieure de la structure de protection 113 et la circonférence extérieure du corps allongé 112 sont sensiblement concentriques. Lorsque l'antenne 101 est suspendue par son propre poids au câble 102, ce dernier s'étend également selon l'axe longitudinal z.

Maintenir l'antenne 101 à poste dans la plateforme aérienne uniquement par le câble 102 ne permet pas d'obtenir un niveau de sécurité suffisant lorsque la plateforme aérienne est en transit notamment au-dessus de zones habitées. Le câble 102 peut se casser, il peut être coupé accidentellement par la cisaille pyrotechnique de sécurité, le frein du treuil 100 peut lâcher et libérer accidentellement le câble. La perte de l'antenne 101 signifie une perte financière importante, mais surtout, sa masse importante pourrait tomber en mer ou au sol en causant de graves dommages matériels ou humains.

La position de l'antenne 101 par rapport au treuil 100 doit être verrouillée lorsqu'elle est à poste à bord de la plateforme aérienne. Le dispositif de détection comprend alors avantageusement un dispositif de cerclage 104 permettant de verrouiller la position de l'antenne 101 par rapport au treuil 100 afin d'empêcher une chute accidentelle de l'antenne et ses conséquences.

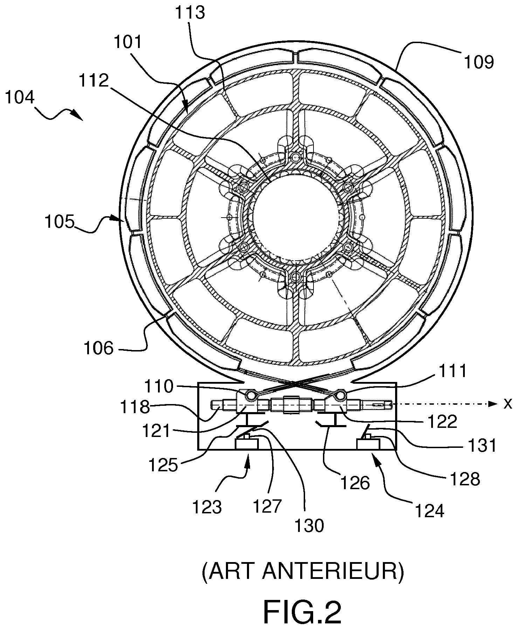

Un dispositif de cerclage de l'art antérieur 104 est représenté sur la figure 2. Il comprend un cerclage 105 comprenant une bande de serrage 106 et des patins 114 destinés à être interposés entre la structure de protection 113 et la bande de serrage 106. Il comprend également un dispositif d'entraînement 115 permettant déplacer des extrémités longitudinales 110 et 111 de la bande de serrage 106 l'une par rapport à l'autre pour réduire la taille de la boucle de sorte à pouvoir venir enserrer un objet, par exemple la structure de protection 113 de l'antenne 101, lors d'une étape dite de serrage, ou augmenter la taille de la boucle de sorte à pouvoir desserrer ou libérer un objet initialement enserré par le cerclage 105, lors d'une étape dite de desserrage.

Chaque extrémité 110 et 111 de la bande de serrage 106 est solidaire d'un écrou 121 et respectivement 122, en translation par rapport à la tige filetée 118 selon l'axe x. Les écrous sont en prise avec des filetages de la tige filetée réalisés en sens inverse de sorte que le serrage et le desserrage sont réalisés par un déplacement des extrémités de la bande de serrage 106 en sens inverse le long de l'axe longitudinal d'une tige filetée 118. L'entraînement de la tige filetée 118 en rotation peut être réalisé par un moteur non représenté ou par un opérateur au moyen d'une molette, via un engrenage non représenté.

Le serrage de la bande 106 doit être limité pour éviter d'endommager l'antenne ou l'endommagement du système vis-écrou ou plus simplement pour permettre le desserrage. En effet, un serrage trop important peut entraîner un blocage de l'écrou sur la tige filetée nécessitant un couple excessif à exercer pour libérer l'antenne. Il est possible de limiter la course aussi bien au serrage qu'au desserrage.

Afin de limiter la course des écrous, le dispositif d'entraînement comprend un organe de commande permettant de commander le moteur et deux capteurs de position permettant de détecter des tailles de boucles limites dans le sens du serrage et du desserrage. L'organe de commande arrête le moteur après détection des tailles de boucle limites.

Comme visible sur la figure 2, chaque capteur de position comprend un interrupteur à bouton poussoir 123 et 124 fixé au bâti 109 et un actionneur, sous forme d'une butée, 125 et respectivement 126 fixée à un des écrous 121 et respectivement 122. La butée 125 vient appui sur le bouton poussoir 127 de l'interrupteur 123 et le pousse perpendiculairement à l'axe x de la tige filetée 118 de sorte à fermer l'interrupteur 123 lorsque, lors de la phase de desserrage, la taille de la boucle atteint une valeur seuil qui correspond à une position seuil de l'écrou 121 le long de la tige filetée 118 en desserrage. La butée 126 vient en appui sur le bouton poussoir 128 et le pousse perpendiculairement à l'axe x de la tige filetée 118 pour fermer l'interrupteur 124 lorsque, lors de la phase de serrage, la taille de la boucle atteint une autre valeur seuil qui correspond à une position seuil de l'écrou 122 le long de la tige filetée 118 en serrage. Des rampes pivotant autour d'axes perpendiculaires au plan de la figure 2 sont prévues à l'interface entre chaque bouton poussoir 127 ou 128 et sa butée 125 ou 126 de façon à éviter une détérioration du bouton poussoir 127 ou 128.

Or, la demanderesse a constaté que les capteurs se dérèglent en opération ce qui a pour conséquence de modifier les valeurs des tailles seuil détectées et conduit à des serrages et/ou à des desserrages excessifs pouvant endommager le dispositif d'entraînement ainsi que l'antenne. Afin d'éviter ces excès, un réglage des capteurs est nécessaire avant chaque opération.

Un but de l'invention est de proposer un dispositif d'entraînement comprenant un capteur de position permettant de détecter une position prédéterminée de façon plus fiable.

A cet effet, l'invention a pour objet un dispositif d'entraînement comprenant :
- un bâti,
- un système vis-écrou comprenant une tige filetée et un premier écrou en liaison hélicoïdale avec la tige filetée, la tige filetée étant reliée au bâti par une liaison pivot permettant à la tige filetée de tourner par rapport au bâti autour d'un axe longitudinal de la tige filetée,
- un premier capteur de position permettant de détecter une position limite du premier écrou le long de l'axe longitudinal, le premier capteur de position comprenant une première partie et une deuxième partie, le premier capteur de position étant sensible à une variation d'une distance entre la première partie et la deuxième partie du premier capteur de position le long de l'axe,
   la première partie étant fixée au premier écrou et la deuxième partie étant liée à la tige filetée sans passer par la liaison pivot et de façon que la rotation de la tige filetée autour de l'axe longitudinal entraîne une variation de distance entre la première partie et la deuxième partie du premier capteur de position le long de l'axe longitudinal.

Avantageusement, le dispositif comprend au moins une des caractéristiques ci-dessous prises seules ou en combinaison :
- la deuxième partie du premier capteur est en liaison hélicoïdale avec la tige filetée,
- le système vis-écrou comprend un deuxième écrou en liaison hélicoïdale avec la tige filetée, le premier écrou étant en prise avec un premier filetage de la tige filetée et le deuxième écrou étant en prise avec un deuxième filetage de la tige filetée, le premier filetage et le deuxième filetage étant réalisés en sens inverse, le dispositif d'entraînement comprenant un deuxième capteur de position permettant de détecter une position limite du deuxième écrou le long de l'axe longitudinal par rapport au bâti, le deuxième capteur de position comprenant une première partie et une deuxième partie, le deuxième capteur de position étant sensible à une variation de distance entre la première partie et la deuxième partie du deuxième capteur de position le long de l'axe,
   la première partie du deuxième capteur de position étant fixée au deuxième écrou et la deuxième partie du deuxième capteur de position étant liée à la tige filetée sans passer par la liaison pivot et de façon que la rotation de la tige filetée autour de l'axe longitudinal entraîne une variation de distance entre la première partie et la deuxième partie du deuxième capteur de position le long de l'axe longitudinal,
- le premier filetage et le deuxième filetage présentent un même pas appelé premier pas,
- la deuxième partie du deuxième capteur est en liaison hélicoïdale avec la tige filetée,
- la deuxième partie des deux capteurs est en prise avec un même filetage supplémentaire,
- le deuxième filetage présente un deuxième pas, le filetage supplémentaire étant réalisé dans le même sens que le deuxième filetage et présente un troisième pas différent du deuxième pas,
- le filetage supplémentaire est interposé entre le premier filetage et le deuxième filetage et présente un troisième pas supérieur au premier pas,
- la première partie et la deuxième partie du premier capteur comprennent un interrupteur à bouton poussoir et un actionneur permettant d'actionner un bouton poussoir de l'interrupteur à bouton poussoir pour provoquer un changement d'état de l'interrupteur,
- le premier capteur de position est configuré pour être sensible à une variation de distance entre sa première partie et sa deuxième partie selon l'axe x mais pas à une variation de position relative angulaire entre sa première partie et sa deuxième partie autour de l'axe x ,
- le bouton poussoir est en liaison glissière parallèlement à l'axe longitudinal avec une partie fixe de l'interrupteur et la butée s'étend dans un plan sensiblement perpendiculaire à l'axe longitudinal,
- il comprend un moteur couplé à la tige filetée pour permettre d'entraîner la tige filetée en rotation autour de son axe longitudinal,
- il comprend un organe de commande permettant de commander le moteur, l'organe de commande recevant des mesures issues du premier capteur de position et étant apte à commander le moteur à partir des mesures,
- l'organe de commande reçoit des mesures issues du deuxième capteur de position, le dispositif de commande étant configuré pour arrêter le moteur dès détection de la position limite du premier écrou lorsque la tige filetée tourne dans un premier sens, et de façon différée après détection de la position limite du deuxième écrou, lorsque la tige filetée tourne dans le sens inverse.

L'invention se rapporte également à un dispositif de cerclage permettant de ceinturer un objet au moyen d'un cerclage comprenant une bande de serrage comprenant une première extrémité et une deuxième extrémité et formant une boucle destinée à entourer l'objet, le dispositif de cerclage comprenant un dispositif d'entraînement selon l'invention, permettant de déplacer les deux extrémités l'une par rapport à l'autre pour élargir ou réduire la taille de la boucle, la première extrémité du cerclage étant solidaire du premier écrou en translation selon l'axe de la tige filetée.

Avantageusement, la deuxième extrémité est solidaire du deuxième écrou en translation selon l'axe de la tige filetée.

La boucle peut être fermée.

L'invention se rapporte également à un dispositif de maintien permettant de serrer un objet creux, ledit dispositif comprenant une première semelle et une deuxième semelle aptes à venir en appui sur un objet creux, à l'intérieur de l'objet creux, le dispositif de maintien comprenant un dispositif d'entraînement selon l'invention, le dispositif d'entraînement étant configuré pour déplacer les deux semelles l'une par rapport à l'autre de sorte à les écarter l'une de l'autre pour venir serrer l'objet ou les rapprocher pour libérer l'objet, la première semelle étant solidaire du premier écrou en translation selon l'axe de la tige filetée, le système vis-écrou comprenant un deuxième écrou en prise avec un deuxième filetage réalisé en sens inverse du premier filetage, la deuxième semelle étant solidaire du deuxième écrou en translation selon l'axe de la tige filetée.

L'invention sera mieux comprise à l'étude de quelques modes de réalisation décrits à titre d'exemples nullement limitatifs, et illustrés par des dessins annexés sur lesquels :
- la figure 1 déjà décrite représente schématiquement un dispositif de détection,
- la figure 2 représente schématiquement en coupe cerclage encerclant une antenne et un dispositif d'entraînement de l'art antérieur,
- la figure 3 représente schématiquement un dispositif de cerclage selon l'invention,
- les figures 4 et 5 représentent schématiquement en coupe (figure 4) et en perspective (figure 5) le dispositif d'entraînement de façon plus détaillée,
- la figure 6 représente un schéma cinématique simplifié du dispositif d'entraînement,
- la figure 7 représente une vue partielle d'un dispositif de maintien selon l'invention.

D'une figure à l'autre les mêmes éléments sont désignés par les mêmes références numériques.

L'invention concerne un dispositif d'entraînement à système vis-écrou. Ce dispositif peut être utilisé dans un dispositif de cerclage 4 destiné à être intégré dans un dispositif de lutte aéroportée ou dispositif de détection tel que représenté sur la figure 1. Le dispositif de cerclage 4 remplace alors le dispositif de cerclage 104. L'invention concerne aussi le dispositif de cerclage 4 et le dispositif de détection tel que représenté sur la figure 1 comprenant le dispositif de cerclage 4 selon l'invention. Le dispositif de cerclage 4 peut de manière plus générale être utilisé pour enserrer tout type d'objet, de préférence à section circulaire.

Le dispositif d'entraînement à système du type vis-écrou peut être utilisé pour des dispositifs autres que les dispositifs de cerclage qui nécessitent l'entraînement d'un écrou le long d'une tige filetée et la détection d'une position de l'écrou le long de la vis. A titre d'exemple, le dispositif d'entraînement peut être mis en œuvre dans une machine outil où un plateau se déplace en translation. La mise en œuvre de l'invention est utile pour détecter une position du plateau.

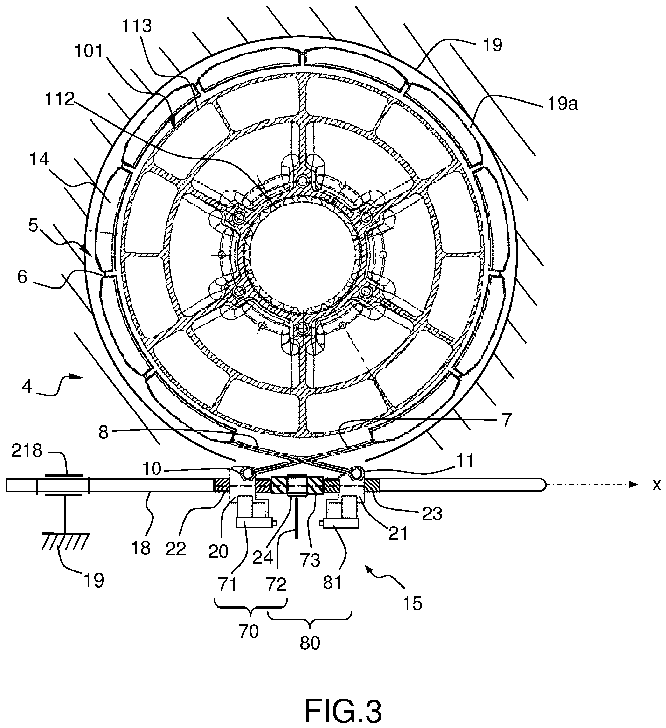

Comme visible sur la figure 3, le dispositif de cerclage 4 selon l'invention comprend un cerclage 5 adapté pour ceinturer un objet, par exemple une antenne 101 et plus précisément sa structure de protection 113, par exemple à section sensiblement circulaire, et permettant d'enserrer ou de libérer l'objet. Le cerclage 5 comprend une bande de serrage 6 formant une boucle destinée à ceinturer l'objet 101. La bande de serrage 6 comprend deux extrémités longitudinales 10 et 11.

Le dispositif de cerclage 4 comprend également un dispositif de serrage/desserrage 15 ou dispositif d'entraînement permettant déplacer des extrémités 10 et 11 de la bande de serrage 6 l'une par rapport à l'autre pour réduire la taille de la boucle de sorte à pouvoir venir enserrer un objet, par exemple l'antenne 101, lors d'une étape dite de serrage, ou augmenter la taille de la boucle de sorte à pouvoir desserrer ou libérer un objet initialement enserré par le cerclage 5, lors d'une étape dite de desserrage. La variation de la taille de la boucle est une variation de la longueur du périmètre de la boucle, c'est-à-dire du diamètre de la boucle. Le raccourcissement du périmètre de la boucle qui se produit lors du serrage, engendre une pression sur l'objet à enserrer 101 et crée un assemblage par serrage entre le cerclage 5 et l'objet 101. Pour maintenir le serrage de l'objet 101, le mécanisme de serrage/desserrage 15 maintient des efforts de traction sur les extrémités libres du cerclage 5. Un bâti 19 délimite un logement 19a recevant le cerclage 5. Le logement 19a présente ici une section circulaire dans l'axe z (perpendiculaire au plan de la figure 3).

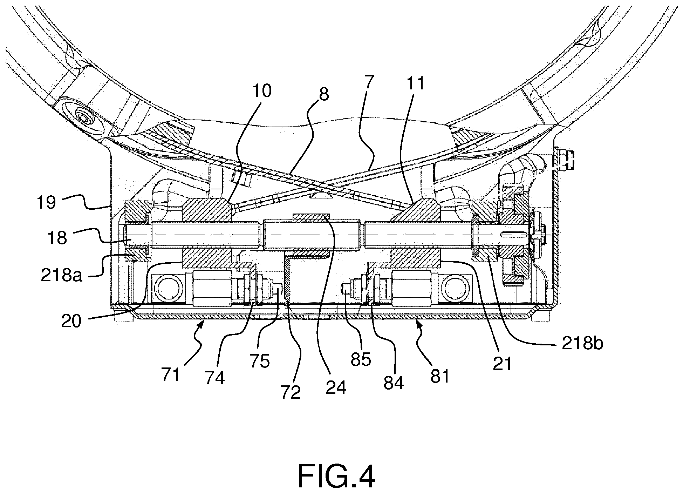

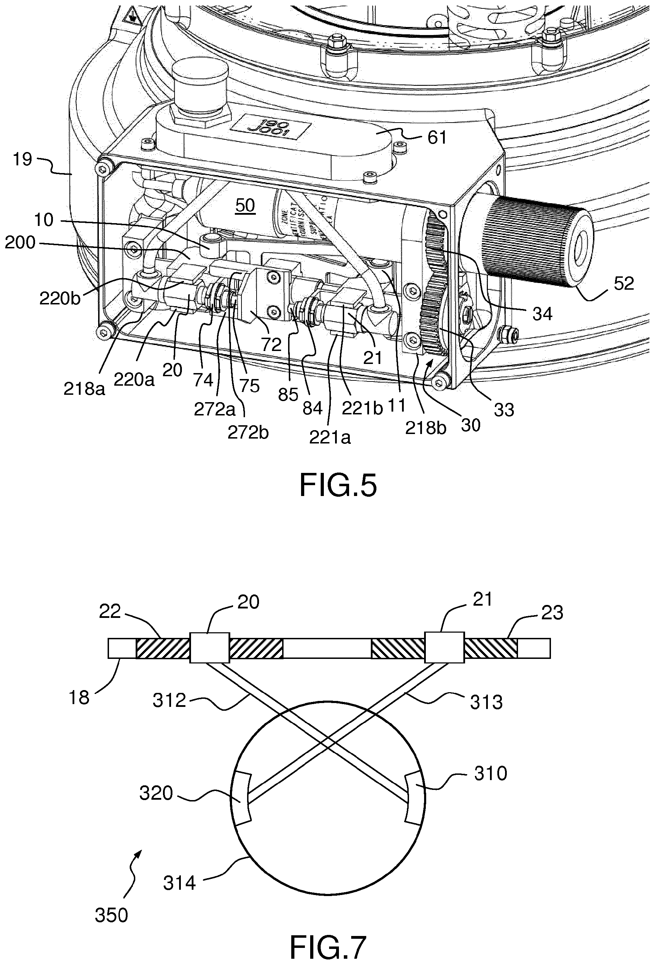

Le dispositif de serrage/desserrage 15 comprend un système vis-écrou comprenant une tige filetée 18 et au moins un écrou 20. Des vues plus précises du dispositif d'entraînement 15 sont représentées sur la figure 4 (en coupe) et sur la figure 5 (en perspective).

La tige filetée 18 est liée au bâti 19 par une liaison pivot 218, visible sur la figure 3, permettant à la tige filetée 18 de tourner par rapport au bâti 19 autour d'un axe longitudinal x de la tige filetée 18. La liaison 218 est par exemple formée par deux paliers lisses réalisés respectivement dans deux plateaux 218a, 218b solidaires du bâti 19, visible sur la figure 4, et espacés selon l'axe x. La liaison 218 peut être réalisée autrement, par exemple, au moyen d'un ou deux paliers à roulement.

Le système vis-écrou comprend également un premier écrou 20 lié en liaison hélicoïdale à la tige filetée 18 et au bâti 19 par une liaison empêchant l'écrou de tourner par rapport au bâti 19 autour de l'axe x. Sur la figure 5, des plateaux 220a et 220b parallèles entre eux et à l'axe de la tige 18 sont disposés de part et d'autre de l'écrou 20 de façon à enserrer l'écrou 20. Le système vis-écrou comprend un deuxième écrou 21 en liaison hélicoïdale avec la tige filetée 18 et lié au bâti 19 par une liaison 221a, 221b empêchant l'écrou 21 de tourner par rapport au bâti 19 autour de l'axe x. Sur la figure 5, des plateaux 221a et 221b parallèles entre eux et à l'axe de la tige 18 sont disposés de part et d'autre de l'écrou 21 de façon à enserrer l'écrou 21. Les plateaux 220a, 220b et 221a et 221b sont en liaison pivot (selon un axe perpendiculaire à l'axe x) avec les extrémités 10 et respectivement 11 de la bande de serrage 6 qui sont elles mêmes bloquées en rotation par rapport au bâti 19 autour de l'axe x par un blocage de la bande de serrage 6 dans le logement 19a.

L'écrou 20 est en prise avec un premier filetage 22 de la tige filetée 18, représenté schématiquement sur la figure 3, et l'écrou 21 est en prise avec un deuxième filetage 23 de la tige filetée 18. Les filetages 22 et 23 sont réalisés en sens inverse et peuvent présenter le même pas. Des pas différents sont également possibles. La première extrémité 10 de la bande de serrage 6 est solidaire de l'écrou 20 en translation par rapport au bâti 19 selon l'axe x et la deuxième extrémité 11 de la bande de serrage 6 est solidaire de l'écrou 21 en translation par rapport au bâti 19 selon l'axe x. Par conséquent, le système vis-écrou est configuré pour déplacer les deux extrémités de la bande de serrage 10 et 11 en sens inverses parallèlement à l'axe x par rapport au bâti 19 lorsque la tige filetée 18 tourne autour de son axe dans un sens (serrage) et en sens inverse (desserrage). Les extrémités 10 et 11 se rapprochent l'une de l'autre lors du desserrage et s'éloignent l'une de l'autre lors du serrage. Sur la réalisation des figures, chaque extrémité 10 et 11 est en liaison pivot avec un écrou 20 et respectivement 21 autour d'un axe perpendiculaire au plan de la boucle formée par la bande de serrage 6. En variante, les extrémités 10 et 11 peuvent être solidaires des écrous respectifs 20 et 21, c'est-à-dire fixées aux écrous ou monobloc avec les écrous.

Sur la réalisation des figures, le système vis-écrou comprend deux écrous 20 et 21 liés chacun à une extrémité 10 et respectivement 11. En variante, il comprend un seul écrou en liaison hélicoïdale avec la tige filetée 18 et fixe en rotation autour de l'axe x par rapport au bâti 19 et solidaire d'une des extrémités de la bande de serrage en translation par rapport au bâti selon l'axe x de façon à pouvoir entraîner cette extrémité par rapport au bâti le long de l'axe x. L'autre extrémité est par exemple fixée au bâti 19.

Comme visible sur la figure 5, le dispositif de serrage/desserrage comprend un train d'engrenage 30 comprenant deux roues dentées 33, 34 en prise l'une avec l'autre permettant d'entraîner la vis en rotation. Un moteur 50 (représenté sur la figure 5) permet d'entraîner la roue 34 en rotation. Le train d'engrenage 30 transmet ce mouvement de rotation à la tige filetée 18 via la roue 33. Le moteur 50 est par exemple couplé à la roue 34 par l'intermédiaire d'un réducteur non représenté.

Le dispositif d'entraînement 15 comprend un organe de commande 61 permettant de commander un moteur 50. Cet organe commande le moteur à partir d'informations issues des capteurs de position 70, 80 représentés sur la figure 3. Chaque capteur de position 70 ou 80 est apte à détecter une position prédéterminée d'un écrou 20 ou 21 par rapport à la tige filetée 18 le long de l'axe longitudinal x correspondant à une taille donnée de la boucle. Le capteur 70 est configuré pour détecter une position limite de l'écrou 20 relativement à la tige filetée 18 selon l'axe x correspondant à une taille de desserrage limite de la boucle. Le capteur 80 est configuré pour détecter une position limite de l'écrou 21 relativement à la tige filetée 18 selon l'axe x correspondant à une taille de serrage limite de la boucle. Les positions limites des deux écrous selon l'axe x sont différentes.

L'organe de commande 61 est configuré pour arrêter le moteur 50 lorsque la taille de desserrage limite est atteinte alors que la tige filetée 18 tourne dans un sens correspondant au desserrage et lorsque la taille limite de serrage est atteinte alors que la tige filetée 18 tourne dans le sens inverse. Ces arrêts peuvent être instantanés ou différés comme nous le verrons plus tard.

Comme visible sur la figure 3, chaque capteur 70 ou 80 comprend deux parties dont une première partie 71 ou 81 fixée à l'écrou correspondant 20 ou respectivement 21. Autrement dit, chaque première partie 71 et 81 est en liaison hélicoïdale avec la tige filetée 18 via un des écrous 20 et respectivement 21.

Chaque capteur comprend une deuxième partie 72 qui est ici commune aux deux capteurs 70 et 80 et forme une plaque perpendiculaire à l'axe x qui sera décrite plus précisément par la suite. La deuxième partie 72 est montée de façon que la rotation de la tige filetée 18 autour d'un axe longitudinal x de la tige filetée 18 entraîne une variation de distance entre la première partie 71 ou 81 et la deuxième partie 72 du capteur de position 70 ou respectivement 80 le long de l'axe longitudinal x de la tige filetée 18, le capteur de position 70 ou respectivement 80 étant configuré pour être sensible à cette variation de distance.

Selon l'invention, comme visible sur la figure 3, la deuxième partie 72 est liée à la tige filetée 18 sans passer par la liaison pivot 218 représentée sur la figure 3. En effet, la liaison pivot 218 présente un jeu axial selon l'axe x. Il s'agit d'une liaison pivot imparfaite. Avec le montage selon l'invention, le jeu de cette liaison 218 qui est fortement sollicitée n'a pas d'impact sur le réglage du capteur qui présente alors l'avantage d'être stable, précis et maitrisé. On économise le jeu de la liaison pivot 218 entre les deux parties de chaque capteur 70, 80.

Sur la réalisation des figures, la partie 72 est en liaison hélicoïdale avec la tige filetée 18 et est liée au bâti 19 par une liaison empêchant une rotation de la partie 72 par rapport au bâti 19. Ceci est réalisé au moyen de deux pattes 272a, 272b visibles sur la figure 5, s'étendant longitudinalement selon l'axe x et espacées selon un axe perpendiculaire à l'axe x de façon à enserrer un bloc 200 solidaire des plateaux 220a et 220b qui sont eux même bloqués en rotation par rapport au bâti 19 autour de l'axe x.

La partie 72 est alors en prise avec un filetage 73, schématisé sur la figure 3, de la tige filetée via un écrou 24.

En variante, on peut lier une partie des deux parties d'un capteur de position à la tige filetée 18 en la rendant solidaire de la tige filetée 18, ou bien en la fixant à la tige filetée 18 en translation selon l'axe x et en la fixant au bâti 19 en rotation selon l'axe x. Ces liaisons ne passent pas par la liaison pivot 218.

Dans la réalisation non limitative des figures, comme visible sur la figure 4, la première partie 71, 81 de chaque capteur est un interrupteur à bouton poussoir. La deuxième partie 72 est un actionneur réalisé, ici, sous forme d'une butée. L'actionneur 72 permet d'actionner le bouton poussoir 75 ou 85 pour provoquer un changement d'état de l'interrupteur. Chaque interrupteur est apte à être soit dans un état fermé, soit dans un état ouvert. Un changement d'état de l'interrupteur correspond à un passage de l'état ouvert à l'état fermé ou inversement.

Le premier interrupteur 71 et son actionneur 72 sont configurés et agencés de façon que le premier actionneur 72 provoque un changement d'état du premier interrupteur 71 lorsque le premier écrou 20 arrive à sa position limite par rapport à la tige filetée 18 le long de l'axe x. Cette position limite correspond à la taille de desserrage limite de la boucle. Le deuxième interrupteur 81 et le deuxième actionneur 72 sont configurés et agencés de façon que le deuxième actionneur 72 provoque un changement d'état du deuxième interrupteur 81 lorsque le deuxième écrou 21 arrive à sa position limite par rapport à la tige filetée 18 selon l'axe x. Cette position correspond à la taille de serrage limite de la boucle L'information de changement d'état de chaque interrupteur est transmise à l'organe de commande 61.

L'interrupteur à bouton poussoir 71 ou 81 est fixé à un écrou 20 ou 21. L'interrupteur à bouton poussoir 71 ou 81 comprend une partie fixe 74 ou 84 solidaire de l'écrou 20 ou 21. La partie fixe 74, 84 comprend un circuit non représenté. L'interrupteur comprend un bouton poussoir 75 ou 85 mobile en translation par rapport à la partie fixe 74 ou 84. La partie fixe 74 ou 84 comprend un contact du type normalement ouvert. Le bouton poussoir 75 ou 85 peut venir en contact physique avec un circuit de la partie fixe pour fermer le circuit. L'interrupteur passe alors à l'état fermé. L'interrupteur est ouvert lorsque le bouton poussoir est distant du circuit. En variante, au moins un interrupteur est à contact du type normalement fermé.

Les boutons poussoirs 75 et 85 sont mobiles en translation par rapport aux parties fixes respectives 74 et 84 sensiblement parallèlement à l'axe x. Autrement dit, chaque bouton poussoir 75 ou 85 est en liaison glissière avec son écrou 20 ou 21 parallèlement à l'axe x. Chaque bouton poussoir 75 ou 85 est interposé entre le contact de son interrupteur 71 ou 81 et la butée 72 selon l'axe x. Le bouton poussoir 75 ou 85 va donc venir fermer l'interrupteur 71, 81 lorsque la butée 72 va se rapprocher de la partie fixe 74 ou 84 et venir pousser le bouton poussoir 75 ou 85 jusqu'à son contact.

Comme visible sur la figure 3, la butée 72 est en prise avec un filetage 73 de la tige filetée qui est réalisé dans le même sens que le filetage 23 (en prise avec l'écrou 21) mais en sens contraire du filetage 22 (en prise avec l'écrou 20). Le filetage 73 présente un pas différent du filetage 23 de façon à pouvoir assurer un rapprochement des deux parties 72 et 71 au moins lorsque la tige filetée tourne dans un sens. Sur l'exemple non limitatif des figures, les filetages 22 et 23 présentent un pas de 1,5mm/tour, le filetage 73 présente un pas de 1,75 mm.

Le fonctionnement du dispositif est le suivant. En partant d'une position initiale dans laquelle l'écrou central 24 (ou la butée 72) est au centre, la bande de serrage 6 est en position intermédiaire entre serrée et desserrée. En manœuvrant la tige filetée 18 dans un sens autour de l'axe x, les écrous 20 et 21 se déplacent en sens inverse car les filetages 22 et 23 sont réalisés en sens inverse. Dans ce sens qui est par exemple le sens du desserrage, les écrous 20 et 21 se rapprochent l'un de l'autre entraînant avec eux les extrémités 10 et 11 de la bande de serrage 6. La taille de la boucle augmente. La butée 72 va en sens contraire de l'écrou 20 et se rapproche de lui. La butée 72 va à la rencontre du bouton poussoir 75 à raison de 3,75 mm/tour. La butée 72 arrive au contact du premier bouton poussoir 75, vient le déplacer, par rapport à la partie fixe 74, selon la direction x dans le sens du déplacement de la butée 72 et ainsi l'amener en contact du contact de l'interrupteur 71 de façon à provoquer le changement d'état de l'interrupteur 71. La position limite de l'écrou 20 selon l'axe x, relativement à la tige filetée 18, correspondant à la taille limite de desserrage de la boucle est alors détectée. Cette information est envoyée à l'organe de commande 61. Avantageusement mais non nécessairement, l'organe de commande 61 est configuré pour arrêter le moteur 50 dès que la position limite de l'écrou 20 est détectée lorsque la tige filetée 18 tourne dans le sens du desserrage. Le cerclage 6 est par exemple rentré à fond dans son logement 19a dans le bâti 19, et il ne faut pas qu'il s'y enfonce davantage sous peine de s'y coincer. L'arrêt doit donc être très précis car, lors de la récupération suivante de l'antenne, il faut être certain que le cerclage soit ouvert au maximum mais sans risque de coincement. Cette vitesse relative importante entre butée 72 et le premier bouton poussoir 75 permet un réglage très précis. À l'ouverture, le cerclage 6 bien réglé stoppera son mouvement toujours à la même position. En variante, l'organe de commande 61 arrête le moteur 50 de manière différée après détection de la position limite de l'écrou 20 lors du desserrage, c'est-à-dire lorsque la tige filetée 18 tourne dans le sens du serrage.

Maintenant lorsque le moteur 50 fait tourner la tige filetée 18 en sens inverse autour de l'axe x, c'est-à-dire dans le sens du serrage. Les écrous 20 et 21 se déplaçant en sens inverse s'éloignent alors l'un de l'autre et la taille de la boucle diminue. La butée 72 se déplace dans la même direction que l'écrou 21, mais un peu plus vite puisque son pas est de 1,75. La butée 72 va donc peu à peu rattraper le bouton poussoir 85 à raison de 0,25 mm/tour. La butée 72 finit par rattraper le bouton poussoir 85, vient l'entraîner en translation selon l'axe x vers le contact de la partie fixe 84 ce qui provoque le changement d'état de l'interrupteur 81. La position limite de l'écrou 21 relativement à la tige filetée 18 selon l'axe x correspondant à la taille limite de serrage de la boucle est détectée. Cette information est transmise à l'organe de commande 61 qui arrête le moteur pour stopper le serrage, de préférence mais non nécessairement, de manière différée après réception de l'information de détection. Lorsque la taille limite de serrage est atteinte, le moteur continue à entraîner la tige 18 pour serrer la bande de serrage jusqu'à ce que la boucle atteigne une taille seuil prédéterminée. Cela garantit un serrage complet de l'antenne quelque soit le diamètre de l'antenne dans une gamme de diamètres prédéterminée. On observe que le serrage bénéficiera toujours d'une large plage d'incertitude puisque l'avancement du contact n'est que de 0,25 mm/tour en relatif. Cette grande plage permet de s'accommoder facilement d'antennes de diamètres différents sous réserve que le retard sur l'arrêt effectif du moteur après contact soit suffisant. Par ailleurs, la faible vitesse relative d'avancement entre les deux parties de l'interrupteur 81 permet de ne pas détériorer le bouton poussoir 85 lorsque le moteur est arrêté de manière différée après détection de la position limite en serrage. Le bouton poussoir 85 continue à s'enfoncer mais à faible vitesse. La course maximale du bouton poussoir 85 peut alors être réduite, l'interrupteur est alors compact. En variante, l'organe de commande 61 est configuré pour arrêter le moteur 50 dès réception de l'information de changement d'état de l'interrupteur 81 lorsque la tige filetée tourne dans le sens du serrage.

Sur la réalisation non limitative des figures, les capteurs 70 et 80 comprennent un même actionneur 72 qui est ici une plaque s'étendant sensiblement dans un plan perpendiculaire à l'axe x. Cette butée 72 commune aux deux capteurs est en prise avec un filetage 73 disposé entre les deux autres filetages 22 et 23. Ce mode de réalisation est particulièrement intéressant car il est compact et nécessite peu de pièces.

Avantageusement, le pas du troisième filetage 73 en prise avec la butée 72 est supérieur au pas du deuxième filetage 23. Cela permet d'assurer le rapprochement de l'écrou 21 et de la butée 72 lorsque la tige tourne dans le sens du serrage et leur éloignement lorsque la tige 18 tourne en sens inverse.

Avantageusement, comme c'est le cas sur la réalisation des figures, le pas du troisième filetage 73 est supérieur à celui du premier filetage 22. Le rapprochement de l'écrou 20 et de la butée 72 lorsqu'ils se déplacent en sens inverse, est alors rapide et permet un arrêt du déplacement à une position précise.

En variante, les deuxièmes parties des deux capteurs sont distinctes. On peut par exemple prévoir une butée par capteur. Ces deuxièmes parties peuvent alors être en prises avec des filetages différents de la tige filetée. Au moins un des capteurs peut présenter une deuxième partie fixe par rapport à la tige filetée ou au moins fixe en translation par rapport à la tige filetée. Au moins une des deuxièmes parties est en prise avec un filetage disposé à l'extérieur de l'espace délimité par les filetages 22 et 23 selon l'axe x.

On peut intervertir la première partie et la deuxième partie d'au moins un capteur. Par exemple, la première partie d'au moins un capteur est un actionneur et la deuxième partie d'au moins un capteur est un bouton poussoir. On peut par exemple fixer au moins un des deux interrupteurs à bouton poussoir à l'écrou 24 et fixer l'actionneur correspondant à l'écrou 20 ou 21. On peut par exemple fixer les deux interrupteurs à l'écrou 21 en les disposant en sens inverse selon l'axe x et prévoir deux butées fixées aux écrous 20 et 21 respectifs.

Sur la réalisation des figures, les capteurs 70, 80 sont du type actionneur / interrupteur à bouton poussoir. En variante, au moins un capteur est un autre type de capteur. Il s'agit par exemple d'un capteur magnétique, d'un capteur optique, d'un capteur du type inductif, d'un capteur à effet doppler permettant de détecter une variation de distance entre deux parties du capteur selon l'axe x. Toutefois, ces capteurs nécessitent un traitement pour détecter la position souhaitée. Ces capteurs peuvent aussi présenter une deuxième partie commune ou des deuxièmes parties distinctes. Selon le cas, un capteur peut être suffisant.

Avantageusement, chaque capteur, ou au moins un capteur, est configuré et agencé pour être sensible à une variation de distance entre ses deux parties parallèlement à l'axe x mais pas à une variation de position angulaire relative entre ses deux parties autour de l'axe x. Cela rend le réglage du capteur insensible au jeu angulaire de la liaison de son écrou par rapport au bâti. Par ailleurs, comme seul le mouvement relatif axial est pris en compte, si les parties d'un capteur se déplacent tangentiellement ou radialement par rapport à la tige selon l'axe x (du fait du jeu de la liaison hélicoïdale), cela n'a aucune importance car leur distance relative selon l'axe x ne varie pas. La solution est donc peu sensible aux dilatations, vibrations, mouvements, tant que la distance réglée entre les deux parties des capteurs de position ne varie pas, le cerclage s'ouvrira et se serrera de la même façon.

C'est par exemple le cas de la réalisation des figures, dans laquelle chaque capteur 70 et 80 comprend une butée 72 s'étendant sensiblement dans un plan perpendiculaire à l'axe x et un interrupteur à bouton poussoir 71 ou 81 comprenant un bouton poussoir 75 ou 85 en liaison glissière avec un écrou 20 ou respectivement 21 parallèlement à l'axe x. Cette solution présente l'avantage d'être compacte et simple. Elle peut être réalisée avec des boutons poussoirs de diamètre raisonnable compatible avec le domaine de l'aéronautique. Par ailleurs, ce mode de réalisation ne nécessite pas l'installation, comme dans l'art antérieur, d'une rampe pivotante pour que le dispositif d'entraînement accepte, sans détérioration, un rapprochement de la partie fixe de l'interrupteur et la butée après fermeture de l'interrupteur. La nature même du bouton poussoir permet ce rapprochement. On peut donc s'affranchir d'une étape fastidieuse de réglage de la rampe et de la position relative de la rampe et de la butée selon l'axe y. C'est aussi par exemple le cas d'un capteur optique comprenant une source émettant un rayon lumineux parallèlement à l'axe x, une deuxième partie sous forme d'une plaque réfléchissante perpendiculaire à l'axe x et un détecteur permettant de détecter un rayon réfléchi par la plaque et mesurant une différence d'une grandeur physique entre le rayon incident et le rayon réfléchi et en déduisant une distance entre la plaque et la source selon l'axe x.

En variante, le capteur est sensible à la variation de position angulaire relative entre ses deux parties autour de la butée. Par exemple, les capteurs de position présentent un agencement similaire à celui de l'art antérieur.

Le dispositif d'entraînement 15 comprend également une molette 52, visible sur la figure 5, solidaire de la roue 33 en rotation autour de son axe de rotation. Cette molette permet à un opérateur d'entraîner la tige en rotation de façon manuelle.

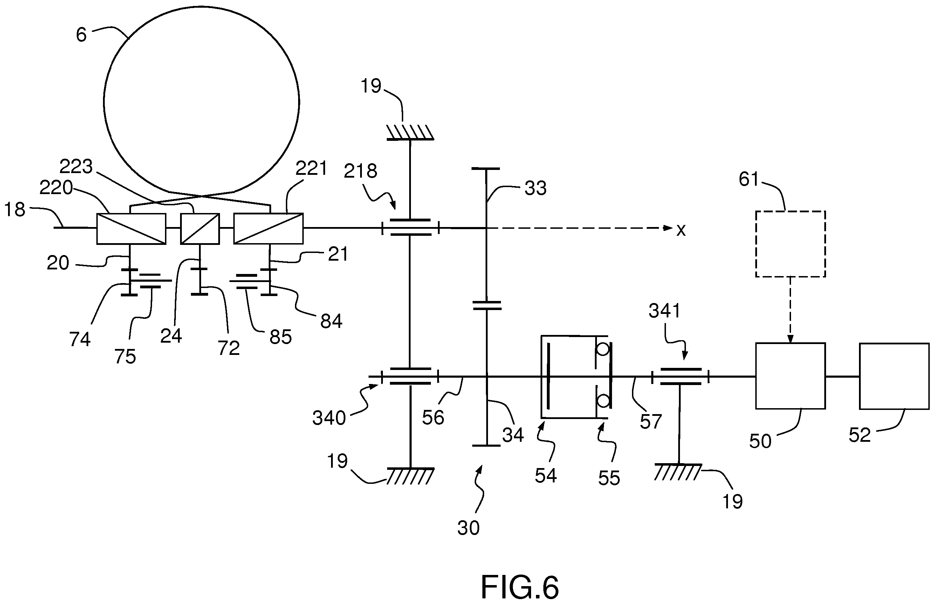

La figure 6 représente un schéma cinématique simplifié du dispositif d'entraînement. Les liaisons hélicoïdales 220 et 221 entre les écrous 20 et respectivement 21 et la tige filetée sont représentées ainsi que les liaisons pivot 218 et 340 entre le bâti 19 et la tige filetée 18 et respectivement la roue 34. On remarque également que les boutons poussoir 75 et 85 sont en liaisons glissières avec les parties fixes 74 et 84 des interrupteurs respectifs. Les liaisons empêchant la rotation des écrous par rapport au bâti ne sont pas représentées.

Avantageusement, comme représenté sur la figure 6, le dispositif d'entraînement 15 comprend un limiteur de couple 54 configuré et agencé pour de supprimer la transmission de couple entre le moteur 50 et la tige filetée 18 lorsque le couple autour de l'axe de la tige filetée dépasse un seuil prédéterminé. Avantageusement, en complément du limiteur de couple 54, le dispositif de transmission de mouvement comprend une roue libre 55. Le limiteur de couple 54 et la roue libre 55 sont configurés et agencés pour permettre la limitation d'un couple de rotation de la tige filetée 18 autour de l'axe x dans un sens de rotation uniquement où la roue libre 55 permet une rotation et donc un glissement dans le limiteur de couple. Dans l'autre sens, la roue libre ne permet aucune rotation et le limiteur de couple ne peut agir. Avantageusement, le sens de rotation dans lequel le limiteur de couple agit est le sens correspondant au serrage. Ce dispositif permet d'éviter que le couple de serrage ne vienne dépasser un seuil prédéterminé qui est le même quelque soit le diamètre de l'antenne. L'arrêt différé du moteur en serrage permet de garantir le glissement du limiteur de couple avant l'arrêt du moteur. En revanche, le limiteur de couple n'agit pas dans le sens du desserrage. La limitation de la course angulaire de la tige filetée dans le sens du serrage permet d'assurer qu'un opérateur ou que le moteur 50 puisse resserrer la bande de serrage après desserrage, le limiteur de couple n'agissant qu'au serrage.

Le moteur 50 est couplé à la deuxième roue 34 par l'intermédiaire du limiteur de couple 54 et de l'éventuelle roue libre 55. La roue libre 55 permet d'accoupler/désaccoupler deux arbres 56 et 57 liés au bâti 19 par des liaisons pivot 340 et respectivement 341. Un premier arbre 56 est solidaire de la roue 34 et l'autre 57 est un arbre du moteur 50.

Sur la réalisation des figures, la bande de serrage 6 forme une boucle fermée. Autrement dit, la bande de serrage comprend deux brins de bande 7 et 8 référencés sur la figure 4 comprenant chacun une des deux extrémités 10 et 11 de la bande de serrage 6 et se croisant de sorte qu'une boucle fermée destinée à entourer complètement l'objet à enserrer, c'est-à-dire à faire un tour complet autour de l'objet, est formée par la bande de serrage 6. L'utilisation d'une bande 6 formant une boucle fermée par croisement de deux brins de bande permet de faire varier de façon significative la taille de la boucle et ainsi de venir enserrer et libérer des objets présentant des diamètres différents. En variante, la bande de serrage 6 ne forme pas une boucle fermée. Dans ce cas ses extrémités se rapprochent lors du serrage et s'éloignent lors du desserrage. Dans ce cas, les deux extrémités se rapprochent lors du serrage et s'éloignent lors du desserrage. Il peut alors être envisagé de prévoir des deuxièmes parties, par exemple des butées, distinctes pour les deux capteurs, en prise avec des filetages différents disposés à l'extérieur de l'espace délimité par les deux filetages 22 et 23.

La bande de serrage 6 comprend par exemple un feuillard métallique ou une bande en matière plastique. Le périmètre ou taille de la boucle varie par exemple, lors du serrage, par une variation de la flexion de la bande de serrage. La bande présente avantageusement une forme au repos telle qu'elle que la partie centrale suit sensiblement la forme du périmètre de l'objet à enserrer.

Le cerclage 5 comprend aussi des patins 14 répartis le long de la bande de serrage de sorte à être destinés à être interposés entre la bande de serrage 6 et l'objet à enserrer 101. Un patin, non représenté ici peut être en appui sur les deux brins de bande 7 et 8 de sorte à être interposé entre les deux brins de bande 7 et 8 et l'objet à enserrer.

L'organe de commande 61 peut comprendre un ou plusieurs circuits électroniques dédiés ou un circuit à usage général. Chaque circuit électronique peut comprendre une machine de calcul reprogrammable (un processeur ou un micro contrôleur par exemple) et/ ou un calculateur exécutant un programme comprenant une séquence d'instructions et/ou une machine de calcul dédiée (par exemple un ensemble de portes logiques comme un FPGA un DSP ou un ASIC, ou tout autre module matériel).

Le dispositif d'entraînement selon l'invention peut être intégré dans un autre type de dispositif de maintien 350 tel que représenté sur la figure 7 du type comprenant deux semelles 310 et 320 destinées à maintenir ou libérer un objet. Pour plus de clarté, on n'a représenté que la tige filetée (sans le troisième filetage), les écrous, les semelles et les barres 312, 313 mais le dispositif d'entraînement est un dispositif d'entraînement selon l'invention. Les semelles 310 et 320 sont respectivement fixées en translation le long de l'axe x à l'écrou 20 et à l'écrou 21 via des barres 312 et respectivement 313 qui se croisent. Lorsque la tige 18 tourne dans un sens les écrous 20 et 21 se rapprochent et les semelles 310, 320 s'écartent de sorte à venir en appui sur un corps creux 314, par exemple à section cylindrique, à l'intérieur du corps creux de sorte à exercer des efforts en sens inverse parallèlement à l'axe x, par exemple opposés, sur le corps creux pour serrer le corps. Ces efforts sont avantageusement radiaux, selon un même axe radial défini pour une section circulaire d'un corps creux. Lorsque la tige filetée 18 tourne dans le sens inverse, les écrous s'éloignent et les semelles se rapprochent de sorte à s'écarter du corps creux et à le libérer. En variante, le sens de déplacement des semelles est celui des écrous. Par exemple, les barres 312 et 313 ne se croisent pas. Pour plus de clarté, seuls les deux filetages 22 et 23 de la tige filetée sont représentés sur la figure 7. Les autres éléments du dispositif d'entraînement ne sont pas représentés les capteurs ainsi que le troisième filetage ne sont pas représentés sur la figure 6 pour plus de clarté. Avantageusement, le limiteur de couple 54 et l'éventuelle roue libre 55 sont agencés pour permettre la limitation d'un couple de rotation de la tige filetée 18 autour de l'axe x dans un sens de rotation, et éventuellement uniquement dans ce sens. Ce sens de rotation est le sens correspondant au serrage, c'est-à-dire le sens de rotation provoquant l'éloignement des deux semelles et donc le rapprochement des deux écrous.

## Revendications

1. Dispositif d'entraînement comprenant :
- un bâti (19),
- un système vis-écrou comprenant une tige filetée (18) et un premier écrou (20) en liaison hélicoïdale avec la tige filetée (18), la tige filetée (18) étant reliée au bâti (19) par une liaison pivot (218) permettant à la tige filetée (18) de tourner par rapport au bâti (19) autour d'un axe longitudinal (x) de la tige filetée (18),
- un premier capteur de position (70) permettant de détecter une position limite du premier écrou (20) le long de l'axe longitudinal (x), le premier capteur de position (70) comprenant une première partie (71) et une deuxième partie (72), le premier capteur de position (70) étant sensible à une variation d'une distance entre la première partie (71) et la deuxième partie (72) du premier capteur de position le long de l'axe (x),
la première partie (71) étant fixée au premier écrou (20) et la deuxième partie (72) étant liée à la tige filetée (18) sans passer par la liaison pivot (218) et de façon que la rotation de la tige filetée (18) autour de l'axe longitudinal (x) entraîne une variation de distance entre la première partie (71) et la deuxième partie (72) du premier capteur de position (70) le long de l'axe longitudinal (x).

2. Dispositif d'entraînement selon la revendication précédente, dans lequel la deuxième partie (72) du premier capteur (70) est en liaison hélicoïdale avec la tige filetée (18).

3. Dispositif d'entraînement selon l'une quelconque des revendications précédentes, dans lequel le système vis-écrou comprend un deuxième écrou (21) en liaison hélicoïdale avec la tige filetée (18), le premier écrou (20) étant en prise avec un premier filetage (22) de la tige filetée (18) et le deuxième écrou (21) étant en prise avec un deuxième filetage (23) de la tige filetée (18), le premier filetage (22) et le deuxième filetage (23) étant réalisés en sens inverse, le dispositif d'entraînement comprenant un deuxième capteur de position (80) permettant de détecter une position limite du deuxième écrou (21) le long de l'axe longitudinal (x) par rapport au bâti (19), le deuxième capteur de position (80) comprenant une première partie (81) et une deuxième partie (72), le deuxième capteur de position (80) étant sensible à une variation de distance entre la première partie (81) et la deuxième partie (72) du deuxième capteur de position le long de l'axe (x),
la première partie (81) du deuxième capteur de position (80) étant fixée au deuxième écrou (21) et la deuxième partie (72) du deuxième capteur de position (80) étant liée à la tige filetée (18) sans passer par la liaison pivot (218) et de façon que la rotation de la tige filetée (18) autour de l'axe longitudinal (x) entraîne une variation de distance entre la première partie (81) et la deuxième partie (72) du deuxième capteur de position (80) le long de l'axe longitudinal (x).

4. Dispositif d'entraînement selon la revendication précédente, dans lequel le premier filetage (22) et le deuxième filetage (23) présentent un même pas appelé premier pas.

5. Dispositif d'entraînement selon l'une quelconque des revendications 3 à 4, dans lequel la deuxième partie (72) du deuxième capteur (80) est en liaison hélicoïdale avec la tige filetée (18).

6. Dispositif d'entraînement selon la revendication précédente en ce qu'elle dépend de la revendication 2, dans lequel la deuxième partie (72) des deux capteurs (70 ; 80) est en prise avec un même filetage supplémentaire (73).

7. Dispositif d'entraînement selon la revendication 6, dans lequel le deuxième filetage (23) présente un deuxième pas, le filetage supplémentaire (73) étant réalisé dans le même sens que le deuxième filetage (23) et présente un troisième pas différent du deuxième pas (23).

8. Dispositif d'entraînement selon les revendications 4 et 7, dans lequel le filetage supplémentaire (73) est interposé entre le premier filetage (22) et le deuxième filetage (23) et présente un troisième pas supérieur au premier pas.

9. Dispositif d'entraînement selon l'une quelconque des revendications précédentes, dans lequel la première partie (71) et la deuxième partie (72) du premier capteur (70) comprennent un interrupteur à bouton poussoir (71, 81) et un actionneur (72) permettant d'actionner un bouton poussoir (75) de l'interrupteur à bouton poussoir pour provoquer un changement d'état de l'interrupteur.

10. Dispositif d'entraînement selon l'une quelconque des revendications précédentes, dans lequel le premier capteur de position (70) est configuré pour être sensible à une variation de distance entre sa première partie et sa deuxième partie selon l'axe x mais pas à une variation de position relative angulaire entre sa première partie et sa deuxième partie autour de l'axe x.

11. Dispositif d'entraînement selon la revendication 10 en ce qu'elle dépend de la revendication 9, dans lequel le bouton poussoir (75) est en liaison glissière parallèlement à l'axe longitudinal (x) avec une partie fixe (74) de l'interrupteur et la butée (72) s'étend dans un plan sensiblement perpendiculaire à l'axe longitudinal (x).

12. Dispositif d'entraînement selon l'une quelconque des revendications précédentes, comprenant un moteur (50) couplé à la tige filetée (18) pour permettre d'entraîner la tige filetée (18) en rotation autour de son axe longitudinal (x).

13. Dispositif d'entraînement selon la revendication précédente, comprenant un organe de commande (61) permettant de commander le moteur (50), l'organe de commande (61) recevant des mesures issues du premier capteur de position et étant apte à commander le moteur (50) à partir des mesures.

14. Dispositif d'entraînement selon la revendication précédente et selon la revendication 8, dans lequel l'organe de commande reçoit des mesures issues du deuxième capteur de position (80), le dispositif de commande (61) étant configuré pour arrêter le moteur (50) dès détection de la position limite du premier écrou (20) lorsque la tige filetée (18) tourne dans un premier sens, et de façon différée après détection de la position limite du deuxième écrou (21), lorsque la tige filetée (18) tourne dans le sens inverse.

15. Dispositif de cerclage (4) permettant de ceinturer un objet au moyen d'un cerclage (5) comprenant une bande de serrage (6) comprenant une première extrémité (10) et une deuxième extrémité (11) et formant une boucle destinée à entourer l'objet, le dispositif de cerclage comprenant un dispositif d'entraînement selon l'une quelconque des revendications précédentes, permettant de déplacer les deux extrémités l'une par rapport à l'autre pour élargir ou réduire la taille de la boucle, la première extrémité (10) du cerclage (6) étant solidaire du premier écrou (20) en translation selon l'axe de la tige filetée (8).

16. Dispositif de cerclage selon la revendication précédente, dans lequel le dispositif d'entraînement est un dispositif d'entraînement selon la revendication 3 et dans lequel la deuxième extrémité est solidaire du deuxième écrou (21) en translation selon l'axe de la tige filetée (18).

17. Dispositif de cerclage selon l'une quelconque des revendications 15 à 16, dans lequel la boucle est fermée.

18. Dispositif de maintien permettant de serrer un objet creux, ledit dispositif comprenant une première semelle et une deuxième semelle aptes à venir en appui sur un objet creux, à l'intérieur de l'objet creux, le dispositif de maintien comprenant un dispositif d'entraînement selon l'une quelconque des revendications 1 à 14, le dispositif d'entraînement étant configuré pour déplacer les deux semelles l'une par rapport à l'autre de sorte à les écarter l'une de l'autre pour venir serrer l'objet ou les rapprocher pour libérer l'objet, la première semelle étant solidaire du premier écrou en translation selon l'axe de la tige filetée (18), le système vis-écrou comprenant un deuxième écrou en prise avec un deuxième filetage réalisé en sens inverse du premier filetage, la deuxième semelle étant solidaire du deuxième écrou en translation selon l'axe de la tige filetée (18).

## Patentansprüche

1. Antriebsvorrichtung, die Folgendes umfasst:
- einen Rahmen (19),
- ein Schrauben-Mutter-System, das einen Gewindestab (18) und eine erste Mutter (20) in schraubenförmiger Verbindung mit dem Gewindestab (18) umfasst, wobei der Gewindestab (18) mit dem Rahmen (19) durch eine Schwenkverbindung (218) verbunden ist, die es zulässt, dass sich der Gewindestab (18) relativ zum Rahmen (19) um eine Längsachse (x) des Gewindestabs (18) dreht,
- einen ersten Positionssensor (70) zum Erfassen einer Grenzposition der ersten Mutter (20) entlang der Längsachse (x), wobei der erste Positionssensor (70) einen ersten Teil (71) und einen zweiten Teil (72) umfasst, wobei der erste Positionssensor (70) auf eine Änderung eines Abstands zwischen dem ersten Teil (71) und dem zweiten Teil (72) des ersten Positionssensors entlang der Achse (x) anspricht,
wobei der erste Teil (71) an der ersten Mutter (20) befestigt ist und der zweite Teil (72) mit dem Gewindestab (18) verbunden ist, ohne durch die Schwenkverbindung (218) zu gehen, und auf eine solche Weise, dass die Drehung des Gewindestabs (18) um die Längsachse (x) eine Änderung des Abstands zwischen dem ersten Teil (71) und dem zweiten Teil (72) des ersten Positionssensors (70) entlang der Längsachse (x) bewirkt.

2. Antriebsvorrichtung nach dem vorhergehenden Anspruch, wobei der zweite Teil (72) des ersten Sensors (70) in schraubenförmiger Verbindung mit dem Gewindestab (18) ist.

3. Antriebsvorrichtung nach einem der vorhergehenden Ansprüche, wobei das Schrauben-Mutter-System eine zweite Mutter (21) in schraubenförmiger Verbindung mit dem Gewindestab (18) umfasst, wobei die erste Mutter (20) mit einem ersten Gewinde (22) des Gewindestabs (18) in Eingriff steht und die zweite Mutter (21) mit einem zweiten Gewinde (23) des Gewindestabs (18) in Eingriff steht, wobei das erste Gewinde (22) und das zweite Gewinde (23) in entgegengesetzten Richtungen ausgeführt sind, wobei die Antriebsvorrichtung einen zweiten Positionssensor (80) zum Erfassen einer Grenzposition der zweiten Mutter (21) entlang der Längsachse (x) relativ zum Rahmen (19) umfasst, wobei der zweite Positionssensor (80) einen ersten Teil (81) und einen zweiten Teil (72) umfasst, wobei der zweite Positionssensor (80) auf eine Änderung des Abstands zwischen dem ersten Teil (81) und dem zweiten Teil (72) des zweiten Positionssensors entlang der Achse (x) anspricht,
wobei der erste Teil (81) des zweiten Positionssensors (80) an der zweiten Mutter (21) befestigt ist und der zweite Teil (72) des zweiten Positionssensors (80) mit dem Gewindestab (18) verbunden ist, ohne durch die Schwenkverbindung (218) zu gehen, und auf eine solche Weise, dass die Drehung des Gewindestabs (18) um die Längsachse (x) eine Änderung des Abstands zwischen dem ersten Teil (81) und dem zweiten Teil (72) des zweiten Positionssensors (80) entlang der Längsachse (x) bewirkt.

4. Antriebsvorrichtung nach dem vorhergehenden Anspruch, wobei das erste Gewinde (22) und das zweite Gewinde (23) die gleiche Steigung, erste Steigung genannt, aufweisen.

5. Antriebsvorrichtung nach einem der Ansprüche 3 bis 4, wobei der zweite Teil (72) des zweiten Sensors (80) in schraubenförmiger Verbindung mit dem Gewindestab (18) ist.

6. Antriebsvorrichtung nach dem vorhergehenden Anspruch in Abhängigkeit von Anspruch 2, wobei der zweite Teil (72) der beiden Sensoren (70; 80) mit einem gleichen zusätzlichen Gewinde (73) in Eingriff steht.

7. Antriebsvorrichtung nach Anspruch 6, wobei das zweite Gewinde (23) eine zweite Steigung aufweist, wobei das zusätzliche Gewinde (73) in der gleichen Richtung wie das zweite Gewinde (23) ausgeführt ist und eine dritte Steigung aufweist, die sich von der zweiten Steigung (23) unterscheidet.

8. Antriebsvorrichtung nach den Ansprüchen 4 und 7, wobei das zusätzliche Gewinde (73) zwischen dem ersten Gewinde (22) und dem zweiten Gewinde (23) angeordnet ist und eine dritte Steigung aufweist, die größer als die erste Steigung ist.

9. Antriebsvorrichtung nach einem der vorhergehenden Ansprüche, wobei der erste Teil (71) und der zweite Teil (72) des ersten Sensors (70) einen Druckknopfschalter (71, 81) und einen Aktuator (72) zum Betätigen eines Druckknopfs (75) des Druckknopfschalters umfassen, um eine Zustandsänderung des Schalters hervorzurufen.

10. Antriebsvorrichtung nach einem der vorhergehenden Ansprüche, wobei der erste Positionssensor (70) so konfiguriert ist, dass er auf eine Änderung des Abstands zwischen seinem ersten Teil und seinem zweiten Teil entlang der x-Achse, jedoch nicht auf eine Änderung der relativen Winkelposition zwischen seinem ersten Teil und seinem zweiten Teil um die x-Achse anspricht.

11. Antriebsvorrichtung nach Anspruch 10 in Abhängigkeit von Anspruch 9, wobei der Druckknopf (75) in Gleitverbindung parallel zur Längsachse (x) mit einem festen Teil (74) des Schalters ist und der Anschlag (72) sich in einer zur Längsachse (x) im Wesentlichen lotrechten Ebene erstreckt.

12. Antriebsvorrichtung nach einem der vorhergehenden Ansprüche, die einen Motor (50) umfasst, der mit dem Gewindestab (18) gekoppelt ist, um es zu ermöglichen, den Gewindestab (18) um seine Längsachse (x) in Drehung zu versetzen.

13. Antriebsvorrichtung nach dem vorhergehenden Anspruch, die eine Steuerung (61) zum Steuern des Motors (50) umfasst, wobei die Steuerung (61) Messwerte vom ersten Positionssensor empfängt und den Motor (50) auf der Basis der Messwerte steuern kann.

14. Antriebsvorrichtung nach dem vorhergehenden Anspruch und nach Anspruch 8, wobei die Steuerung Messwerte vom zweiten Positionssensor (80) empfängt, wobei die Steuerung (61) zum Anhalten des Motors (50) konfiguriert ist, sobald die Grenzposition der ersten Mutter (20) erfasst wird, wenn sich der Gewindestab (18) in einer ersten Richtung dreht, und zeitlich versetzt, nachdem die Grenzposition der zweiten Mutter (21) erfasst worden ist, wenn sich der Gewindestab (18) in der entgegengesetzten Richtung dreht.

15. Umreifungsvorrichtung (4) zum Umreifen eines Gegenstandes mit einer Umreifung (5) umfassend ein Spannband (6), das ein erstes Ende (10) und ein zweites Ende (11) umfasst und einen Ring bildet, der den Gegenstand umschließen soll, wobei die Umreifungsvorrichtung eine Antriebsvorrichtung nach einem der vorhergehenden Ansprüche umfasst, die es ermöglicht, die beiden Enden relativ zueinander zu bewegen, um den Umfang des Rings zu vergrößern oder zu verkleinern, wobei das erste Ende (10) der Umreifung (6) fest mit der ersten Mutter (20) in Translation entlang der Achse des Gewindestabs (8) verbunden ist.

16. Umreifungsvorrichtung nach dem vorhergehenden Anspruch, wobei die Antriebsvorrichtung eine Antriebsvorrichtung nach Anspruch 3 ist und wobei das zweite Ende fest mit der zweiten Mutter (21) in Translation entlang der Achse des Gewindestabs (18) verbunden ist.

17. Umreifungsvorrichtung nach einem der Ansprüche 15 bis 16, wobei der Ring geschlossen ist.

18. Haltevorrichtung zum Festziehen eines hohlen Gegenstands, wobei die Vorrichtung eine erste Grundplatte und eine zweite Grundplatte umfasst, die im Innern eines hohlen Gegenstands auf diesem aufliegen können, wobei die Haltevorrichtung eine Antriebsvorrichtung nach einem der Ansprüche 1 bis 14 umfasst, wobei die Antriebsvorrichtung zum Bewegen der beiden Grundplatten relativ zueinander konfiguriert ist, um sie voneinander zu entfernen, um den Gegenstand festzuziehen, oder sie zusammenzuführen, um den Gegenstand freizugeben, wobei die erste Grundplatte fest mit der ersten Mutter in Translation entlang der Achse des Gewindestabs (18) verbunden ist, wobei das Schrauben-Mutter-System eine zweite Mutter umfasst, die mit einem zweiten Gewinde in Eingriff steht, das in entgegengesetzter Richtung zum ersten Gewinde ausgeführt ist, wobei die zweite Grundplatte fest mit der zweiten Mutter in Translation entlang der Achse des Gewindestabs (18) verbunden ist.

## Claims

1. A driving device comprising:
- a frame (19),
- a screw-nut system comprising a threaded rod (18) and a first nut (20) helicoidally connected to the threaded rod (18), the threaded rod (18) being connected to the frame (19) by a pivot connection (218) that allows the threaded rod (18) to rotate with respect to the frame (19) about a longitudinal axis (x) of the threaded rod (18),
- a first position sensor (70) for detecting a limit position of the first nut (20) along the longitudinal axis (x), the first position sensor (70) comprising a first part (71) and a second part (72), the first position sensor (70) being sensitive to a variation in a distance between the first part (71) and the second part (72) of the first position sensor along the axis (x),
the first part (71) being fixed to the first nut (20) and the second part (72) being connected to the threaded rod (18) without passing via the pivot connection (218) and in such a way that rotation of the threaded rod (18) about the longitudinal axis (x) leads to a variation in the distance between the first part (71) and the second part (72) of the first position sensor (70) along the longitudinal axis (x).

2. The driving device according to the preceding claim, wherein the second part (72) of the first sensor (70) is helicoidally connected to the threaded rod (18).

3. The driving device according to any of the preceding claims, wherein the screw-nut system comprises a second nut (21) helicoidally connected to the threaded rod (18), the first nut (20) being engaged with a first screw thread (22) of the threaded rod (18) and the second nut (21) being engaged with a second screw thread (23) of the threaded rod (18), the first screw thread (22) and the second screw thread (23) being formed with opposite directions, the driving device comprising a second position sensor (80) for detecting a limit position of the second nut (21) along the longitudinal axis (x) with respect to the frame (19), the second position sensor (80) comprising a first part (81) and a second part (72), the second position sensor (80) being sensitive to a variation in the distance between the first part (81) and the second part (72) of the second position sensor along the axis (x),
the first part (81) of the second position sensor (80) being fixed to the second nut (21) and the second part (72) of the second position sensor (80) being connected to the threaded rod (18) without passing via the pivot connection (218) and in such a way that rotation of the threaded rod (18) about the longitudinal axis (x) leads to a variation in the distance between the first part (81) and the second part (72) of the second position sensor (80) along the longitudinal axis (x).

4. The driving device according to the preceding claim, wherein the first screw thread (22) and the second screw thread (23) have the same pitch, referred to as first pitch.

5. The driving device according to any one of claims 3 to 4, wherein the second part (72) of the second sensor (80) is helicoidally connected to the threaded rod (18).

6. The driving device according to the preceding claim, insofar as it is dependent on claim 2, wherein the second part (72) of the two sensors (70; 80) is engaged with one and the same additional screw thread (73).

7. The driving device according to claim 6, wherein the second screw thread (23) has a second pitch, the additional screw thread (73) being formed with the same direction as the second screw thread (23) and having a third pitch different from the second pitch (23).

8. The driving device according to claims 4 and 7, wherein the additional screw thread (73) is interposed between the first screw thread (22) and the second screw thread (23) and has a third pitch longer than the first pitch.

9. The driving device according to any one of the preceding claims, wherein the first part (71) and the second part (72) of the first sensor (70) comprise a push-button switch (71, 81) and an actuator (72) for actuating a push-button (75) of the push-button switch to bring about a change in state of the switch.

10. The driving device according to any one of the preceding claims, wherein the first position sensor (70) is configured to be sensitive to a variation in distance between its first part and its second part along the axis x, but not to a variation in relative angular position between its first part and its second part about the axis x.

11. The driving device according to claim 10 insofar as it is dependent on claim 9, wherein the push-button (75) is in a sliding connection parallel to the longitudinal axis (x) with a fixed part (74) of the switch and the stop (72) extends in a plane substantially perpendicular to the longitudinal axis (x).

12. The driving device according to any one of the preceding claims, comprising a motor (50) that is coupled to the threaded rod (18) to allow threaded rod (18) to be driven in rotation about its longitudinal axis (x).

13. The driving device according to the preceding claim, comprising a control member (61) for controlling the motor (50), the control member (61) receiving measurements emanating from the first position sensor and being able to control the motor (50) on the basis of the measurements.

14. The driving device according to the preceding claim and according to claim 8, wherein the control member receives measurements emanating from the second position sensor (80), the control device (61) being configured to stop the motor (50) as soon as the limit position of the first nut (20) is detected when the threaded rod (18) is rotating in a first direction, and, after a delay, following detection of the limit position of the second nut (21), when the threaded rod (18) is rotating in the opposite direction.

15. A strapping device (4) for binding an object by means of a strap (5) comprising a clamping strip (6) comprising a first end (10) and a second end (11) and forming a loop that is intended to surround the object, the strapping device comprising a driving device according to any one of the preceding claims, allowing movement of the two ends with respect to one another so as to enlarge or decrease the size of the loop, the first end (10) of the strap (6) being rigidly connected to the first nut (20) in terms of translation along the axis of the threaded rod (8).

16. The strapping device according to the preceding claim, wherein the driving device is a driving device according to claim 3 and wherein the second end is rigidly connected to the second nut (21) in terms of translation along the axis of the threaded rod (18).

17. The strapping device according to any one of claims 15 to 16, wherein the loop is closed.

18. A holding device for clamping a hollow object, said device comprising a first pad and a second pad which are capable of pressing against a hollow object, on the interior of the hollow object, the holding device comprising a driving device according to any one of claims 1 to 14, the driving device being configured to move the two pads in relation to one another so as to move them away from one another to clamp the object or to move them closer together to release the object, the first pad being rigidly connected to the first nut in terms of translation along the axis of the threaded rod (18), the screw-nut system comprising a second nut engaged with a second screw thread which is formed in the opposite direction to the first screw thread, the second pad being rigidly connected to the second nut in terms of translation along the axis of the threaded rod (18).
